# EUROPÄISCHE PATENTANMELDUNG

(11) **EP 1 860 159 A2**
(43) Veröffentlichungstag der Anmeldung: **28.11.2007**
(21) Anmeldenummer: 07008286.2
(22) Anmeldetag: 24.04.2007
(51) Int. Cl.: C09C 1/40

(54) **Korrosionsschutzpigmente**

(30) Priorität: 24.05.2006 DE 102006024869
(71) Anmelder: BK Giulini GmbH, 67065 Ludwigshafen (DE)
(72) Erfinder: Staffel, Thomas, 67269 Grünstadt (DE); Wahl, Friedrich, 68219 Mannheim (DE); Metz, Angelika, 69469 Weinheim (DE)
(74) Vertreter: Wagner, Jutta

(57) **Zusammenfassung**

Die vorliegende Erfindung betrifft Korrosionsschutzpigmente aus Aluminiumorthophosphat, ihre Verwendung als Korrosionsschutzpigment in Anstrichmitteln, sowie ein Verfahren zu ihrer Herstellung.

## Beschreibung

Die vorliegende Erfindung betrifft zinkfreie Korrosionsschutzpigmente, ihre Verwendung in Farben, Lacken etc., sowie ein Verfahren zu ihrer Herstellung.

Korrosionsschutzpigmente sind seit langem bekannt. Sie sollen als Beimischung zu Farben, Lacken und anderen Anstrichmitteln eine Korrosion des behandelten metallischen Untergrundes verhindern und günstigerweise, wie z.B. Rostumwandler, schon vorhandene Korrosionsprodukte beseitigen. Selbstverständlich müssen sie dabei mit dem Anstrichmittel kompatibel sein.

Es werden drei typische Wirkungsweisen von Korrosionsschutzpigmenten unterschieden.

Pigmente mit physikalischer Korrosionsschutzwirkung, wie z.B. Eisenglimmer sind chemisch inert und werden als inaktive bzw. passive Pigmente bezeichnet, deren Wirkungsweise darin besteht, dass sie die Diffusionswege für Wasser, Sauerstoff und korrosionsfördernde Ionen erheblich verlängern und die Untergrundhaftung des Anstrichs und der Beschichtung verbessern.

Pigmente mit chemischer Korrosionsschutzwirkung, wie z.B. Zinkoxid, zeigen eine bestimmte Löslichkeit und sind in der Lage, bestimmte pH-Werte in der Beschichtung zu stabilisieren. Solche Pigmente werden als aktiv bezeichnet. Ihre Wirkungsweise basiert auf Wechselwirkungen im Grenzflächenbereich zwischen Pigment und Untergrund, Pigment und Bindemittel sowie Pigment und eingedrungenen Fremdionen. Dabei können sich Redoxreaktionen abspielen, so dass neue schützende Verbindungen entstehen können. Durch Seifenbildung mit dem Bindemittel bzw. Neutralisation der sauren Abbauprodukte bleibt in der Beschichtung ein bestimmter pH-Wert weitgehend eingestellt. Es werden die korrosionsaktiven Ionen eliminiert.

Pigmente mit elektrochemischer Korrosionsschutzwirkung wirken passivierend auf die zu schützenden Metalloberflächen. Die Korrosionsschutzpigmente werden danach beurteilt, ob sie im anodischen Bereich oder im kathodischen Bereich wirksam sind. Pigmente, die die Auflösung des Metalles durch Schutzschichtenbildung verhindern, werden als im anodischen Bereich wirksam bezeichnet. Pigmente, die aufgrund ihres hohen Oxidationspotentials die Bildung von Oxidationsprodukten wie z.B. Rost bei Eisen unterbinden, werden als im kathodischen Bereich wirksam bezeichnet. Beispiele für im anodischen Bereich wirksame Pigmente sind Phosphate, für im kathodischen Bereich wirksame Pigmente sind es Chromate.

Die zunehmende Bedeutung des Korrosionsschutzes und die Erkenntnisse zu den Umwelt- und Gesundheitsgefahren, die von bekannten blei- und chromathaltigen Korrosionsschutzpigmenten ausgehen, haben zur Weiterentwicklung der toxikologisch unbedenklicheren Korrosionsschutzpigmente auf der Basis von Phosphaten, insbesondere Zn₃(PO₄)₂, gegebenenfalls in Kombination mit AlPO₄, ZnO sowie Molybdat-Wolframat- und Zirkonat-Pigmenten, metallischem Zink, organischen Pigmenten und reinen Barriere-Pigmenten, wie Eisenglimmer, geführt.

Die derzeit verwendeten Zinkphosphate sind jedoch als fischgiftig eingestuft und es wurden schon verschiedene Vorschläge für Ersatzprodukte gemacht.

In O. Kusnierik, K. Barton, Farbe+Lack, 11, 900 - 901 (1998) wird der Einsatz von polymeren Phosphaten als anorganische Korrosionsschutzbeschichtung beschrieben, zum Einsatz kommen Aluminiumpolyphosphate.

Eine Veröffentlichungsreihe unter dem Titel "Studies on anticorrosive properties of aluminium triphosphate pigments" in Polymers Paint Colour Journal befasst sich mit der Wirksamkeit von Aluminiumtriphosphaten als Korrosionsschutzpigment. So beschreibt Teil 1, M. Nisihara et al, 174, 590 - 597 (1984) im Vergleich zu Zinkchromaten eine gleiche oder überlegene Wirksamkeit als Korrosionsschutzpigment in Alkydharzanstrichen. Teil 4, J. Nakano et al, 175, 704 - 706 (1985) beschreibt eine Wirksamkeit gegen Weißrostbildung.

Andere Ansätze versuchen durch einen nur teilweisen Ersatz des Zink die Wirksamkeit zu steigern, siehe z.B. P. Kalenda et al in Macromol. Symp., 187, 397 - 406 (2002) und EP 1 116 756.

EP 1 109 867 offenbart Korrosionsschutzpigmente aus oberflächenbeschichteten Festkörpern, bei denen Mn₃(PO₄)₂ und Aluminiumoxide und/oder Aluminiumhydroxide aufgefällt sind.

EP 1 029 901 bezieht sich auf anorganische Korrosionsschutzpigmentkombinationen bei denen ein oder mehrere Pigmente, ausgewählt aus Phosphat-, Polyphosphat- und Metalloxid-Pigmenten mit BaSO₄ gemeinsam gefällt werden.

Keines der beschriebenen Korrosionsschutzpigmente erfüllt alle Anforderungen an Wirksamkeit, Verarbeitbarkeit und Unbedenklichkeit im Hinblick auf Umwelt- und Gesundheit vollständig. Es besteht daher weiterhin Bedarf an brauchbaren Korrosionsschutzpigmenten und die Aufgabe entsprechende Pigmente bereitzustellen.

Überraschend wurde nun gefunden, dass Aluminiumorthophosphat ein sehr ausgewogenes Eigenschaftsbild bezüglich aller oben genannten Anforderungen zeigt.

Die obige Aufgabe wird somit gelöst durch ein Korrosionsschutzpigment aus Aluminiumorthophosphat.

Das Aluminiumorthophosphat kann ein amorphes Aluminiumorthophosphat, ein orthorhombisches Aluminiumorthophosphat, eine Mischung aus 80 bis 20 Gew.-% amorphem und 20 bis 80 Gew.-% orthorhombischem Aluminiumorthophosphat, eine Mischung aus 10 bis 20 Gew.-% amorphem, 20 bis 50 Gew.-% orthorhombischem und 20 bis 70 Gew.-% trigonalem (Berlinit) Aluminiumorthophosphat oder eine Mischung aus Berlinit und orthorhombischen Aluminiumorthophosphat sein. Es versteht sich, dass die Summe der Anteile der einzelnen Aluminiumorthophosphate 100 % ergeben muss. Verunreinigungen bzw. Nebenbestandteile sind hierbei nicht berücksichtigt, ihre Menge kann maximal 15 Gew.-% vorzugsweise maximal 10 Gew.-% und insbesondere maximal 5 Gew.-% betragen.

Bevorzugte Aluminiumorthophosphate sind amorphes Aluminiumorthophosphat, Mischungen aus 60 bis 40 Gew.-% amorphem und 40 bis 60 Gew.-% orthorhombischem Aluminiumorthophosphat, insbesondere Mischungen mit etwa gleichen Teilen amorphem und orthorhombischem Aluminiumorthophosphat, sowie Mischungen aus 20 bis 50 Gew.-% Berlinit und 80 bis 50 Gew.-% orthorhombischem Aluminiumorthophosphat, vorzugsweise 20 bis 40 Gew.-Berlinit und 80 bis 60 Gew.-% orthorhombischem Aluminiumorthophosphat. Ganz besonders bevorzugt ist amorphes Aluminiumorthophosphat.

Aluminiumorthophosphate vom Tridymit-Typ sind nicht gut geeignet.

Als Nebenbestandteile sollten maximal 1 Gew.-% wasserlösliche Phosphate und unter 0,05 % Chloride und/oder Sulfate enthalten sein. Der Glühverlust beträgt typischerweise ca. 1 bis 20 %, der pH-Wert einer 1 %-igen Suspension etwa 6 bis 7,5.

Das erfindungsgemäße Aluminiumorthophosphat enthält im wesentlichen keine Aluminiumpolyphosphate, d.h. deren Anteil liegt unter 3 Gew.-%, vorzugsweise unter 1 Gew.-% und insbesondere unter 0,1 Gew.-%.

Die Herstellung der erfindungsgemäßen Korrosionsschutzpigmente erfolgt in an sich bekannter Weise durch Umsetzung von Aluminiumsalzen mit Phosphorsäure oder Phosphaten, wobei das schwerlösliche Aluminiumorthophosphat gefällt und abgetrennt wird. Beispielsweise kann Aluminiumhydroxid mit Phosphorsäure der Aluminiumsulfat mit Natriumphosphat umgesetzt werden. Anschließend erfolgt eine Trocknung, ggfs. eine Temperung und gewünschtenfalls eine Mahlung auf die benötigte Korngröße.

Das erfindungsgemäß verwendete Aluminiumorthophosphat enthält je nach Bedingungen bei der Umsetzung von Aluminiumsalz und Phosphorsäure bzw. Temperung mehr oder weniger große Anteile orthorhombisches und trigonales Aluminiumorthophosphat und kann mehr oder weniger kristallin sein.

Die Umsetzung kann beispielsweise mit Aluminiumsulfat oder Aluminiumhydroxid erfolgen. Es ist möglich, zur Einstellung des pH-Wertes bei der Fällung z.B. Carbonate wie Natriumcarbonat zuzufügen. Das Aluminiumorthophosphat fällt, ggfs. nach weiterer Verdünnung mit Wasser, aus und wird abfiltriert. Anschließend erfolgt eine Trocknung, z.B. Sprühtrocknung.

Sofern gewünscht kann das getrocknete Produkt durch eine Temperung bei 500 bis 800 °C, vorzugsweise 600 bis 700 °C weiterbehandelt werden. Die Temperung führt in der Regel zu weniger reaktiven Produkten, die eine Wirksamkeit über längere Zeit aufrechterhalten. Eine Temperung bei höheren Temperaturen sollte vermieden werden, da hierdurch die Löslichkeit negativ beeinflusst wird.

Sofern die Korngröße des erhaltenen Aluminiumorthophosphat nicht schon fein genug ist, schließt sich eine Mahlung bzw. Sichtung oder Siebung an. Vorzugsweise sollte die Korngröße im Bereich von D₅₀ 1 - 15 µm und D₉₀ 1 - 30 µm haben, wobei D₉₀ oberhalb von D₅₀ liegt. Insbesondere sollte D₅₀ ≤ 10 µm und D₉₀ ≤ 15 µm sein. Es ist weiter bevorzugt wenn maximal etwa 0,01 % Kornanteil mit einer Größe von über 32 µm vorliegt.

Das Schüttgewicht liegt vorzugsweise im Bereich von 90 bis 250 g/l, bei amorphem Aluminiumorthophosphat insbesondere im Bereich von 90 bis 120 g/l.

Das erfindungsgemäße Korrosionsschutzpigment Aluminiumorthophosphat eignet sich zum Ersatz von Zinkphosphat in Anstrichmitteln. Es besitzt eine gute Korrosionsschutzwirkung und kann sowohl in Grundierungen als auch in Deckfarben zum Einsatz kommen. Zu den Anstrichmitteln, für die Aluminiumorthophosphat brauchbar ist, zählen Farben auf Wasser- und Lösemittelbasis, Lacke auf Wasser-und Lösemittelbasis sowie Lasuren.

Die Formulierung von Anstrichmitteln ist dem Fachmann an sich bekannt. Die konkreten Rezepturen richten sich unter anderem nach dem zu beschichtenden Untergrund, der Art des Anstrichmittels, der vorgesehenen Applikationsweise etc. Aluminiumorthophosphat ist mit den meisten üblicherweise in Anstrichmitteln enthaltenen Bestandteilen gut verträglich. Typischerweise werden etwa 1 bis 20 Gew.-% Aluminiumorthophosphat in die Anstrichmittel eingearbeitet. Sofern jedoch vor der Applikation eine Verdünnung vorgesehen ist, können ggfs. auch höhere Anteile zum Einsatz kommen.

Die folgenden Beispiele sollen die Erfindung weiter veranschaulichen, ohne sie jedoch auf die konkret beschriebenen Ausführungsformen zu beschränken. Alle %-Angaben beziehen sich, soweit nicht anders angegeben, auf das Gewicht.

### Beispiel 1: Herstellung von Aluminiumorthophosphat

Phosphorsäure (583 g 84%ig, 5,0 mol) wird vorgelegt und auf ca. 80°C erwärmt, danach wird unter Rühren Aluminiumhydroxid (410 g, Feuchthydrat mit 5 % Wasser, 5,0 mol) zügig zugegeben, wobei sich das Reaktionsgemisch auf ca. 120°C erwärmt. In die entstehende stark viskose Suspension werden 500 ml Wasser eingetragen. Der ausfallende kristalline Feststoff wird über ein Papierfilter (S&S Nr.604 0 =110mm) abgesaugt, mit 65 ml Wasser gewaschen und über Nacht bei 110°C getrocknet. Für den nächsten Ansatz werden wiederum dieselbe Menge Phosphorsäure und Aluminiumhydroxid wie beschrieben umgesetzt. Die Verdünnung erfolgt mit der im ersten Ansatz erhaltenen Mutterlauge, anschließend wird wiederum abfiltriert, gewaschen und getrocknet. Es werden acht weitere Ansätze analog zum zweiten Ansatz umgesetzt, wobei jeweils die Mutterlauge des vorhergehenden Ansatzes zur Verdünnung verwendet wird.

Über alle neun Ansätze wurde eine Ausbeute von 6719 g, entsprechend 95 % erhalten.

### Beispiel 2: Temperung von Aluminiumorthophosphat

Das gemäß Beispiel 1 hergestellte Aluminiumorthophosphat sowie ein unter der Bezeichnung B111 von BK Giulini Chemie GmbH, DE, erhältliches, aus Aluminiumsulfat mit Phosphorsäure und Natriumcarbonat gefälltes Aluminiumorthophosphat, werden getempert. Hierfür wird das Aluminiumorthophosphat über eine Rüttelrinne in ein hitzebeständiges Edelstahlrohr (DIN 1.4841) eingetragen, welches mit einem Gefälle von 80 mm/1600 mm in einem Ofen mit einer Temperatur von 700 °C angeordnet ist und mit 10 Umdrehungen / min. rotiert. Durch die Drehbewegung wird das Material durch die beheizte Zone geführt und am Ende des Rohres ausgetragen. Der Durchsatz beträgt zwischen 0,8 und 1,3 kg/h.

### Beispiel 3: Untersuchung der Wirksamkeit

Es wurden sieben verschiedene Korrosionsschutzpigmente in einen standardisierten Lack eingearbeitet, der Lack auf Bleche aufgetragen und anschließend Haftfestigkeit (DIN 53151), Blasengrad (DIN 53209) und Unterwanderung (DIN 53167) im Salzsprühtest, Kondenswassertest und nach Nasslagerung bestimmt. Die verwendeten Pigmente sind in Tabelle 1 zusammengestellt:

**Tabelle 1**

| Bezeichnung | Substanz. | Herstellung/Lieferant | Temperung | Ölzahl |
|---|---|---|---|---|
| Wa 2894 | AIPO₄, Mischung 70 % Berlinit / 30 % orthorhombisch | Beispiel 1 | Beispiel 2 | 53,75 |
| Wa 2890 | AIPO₄, Mischung 50 % orthorhombisch 50 % amorph | B111, BK Giulini / Chemie GmbH | Beispiel 2 | 95,05 |
| Wa 2880C | AIPO₄ amorph, wasserfrei | B111, BK Giulini Chemie GmbH | Beispiel 2 | 34,19 |
| Wa 2825 | AlPO₄ 100 % orthorhombisch | B111, BK Giulini Chemie GmbH | Umluftofen 650 °C, 2 h | 37,76 |
| Wa 2886 | B111 AIPO₄ amorph, wasserhaltig | B111, BK Giulini Chemie GmbH | keine | 113,0 9 |
| ZP 10 | Zinkphosphat | ZP 10, Heubach | | 30,00 |
| Wa 2901 | Magnesium-oxi-aminophosphat | Pigmentan E, Pigmentan Ltd | | 89,28 |

ZP10 und Wa 2901 sind Vergleichsbeispiele, ZP 10 ein Zinkphosphat und Wa 2901 ein im Handel befindliches, zinkfreies Ersatzprodukt. Die Bestimmung der Ölzahl erfolgte nach ISO 787, Teil 5.

Für den Lack wurden 2 Rezepturen verwendet, bei der ersten Rezeptur wurde, wie in der Farbenindustrie üblich, die Menge Pigment entsprechend einer gleichen Ölzahl ausgetauscht. Da sich die Ölzahlen der untersuchten Pigmente stark unterschieden, wurde in der 2. Rezeptur ein Austausch mit gleicher Masse Pigment vorgenommen.

Rezeptur 1:

**Tab. 1: Rezepturen des Stammlackes (Ansatz ca. 500g, Pigmente nach Ölzahlen ausgetauscht)**

| | **Rohstoff** | **1/1 (g)** | **1/2 (g)** | **1/3 (g)** | **1/4 (g)** | **1/5 (g)** | **1/6 (g)** | **1/7 (g)** |
|---|---|---|---|---|---|---|---|---|
| 1 | Beckopox EP 301, 75%ig in Xylol | 137,49 | 151,65 | 152,12 | 141,87 | 153,28 | 146,75 | 152,90 |
| 2 | Xylol | 41,27 | 45,52 | 45,66 | 42,58 | 46,01 | 44,05 | 45,90 |
| 3 | Dowanol PM | 35,39 | 39,03 | 39,15 | 36,51 | 39,45 | 37,77 | 39,35 |
| 4 | Methylisoamyl-keton | 8,70 | 9,60 | 9,63 | 8,98 | 9,70 | 9,29 | 9,68 |
| 5 | Bentone 38, 8%ig in Xylol | 36,99 | 40,80 | 40,92 | 38,17 | 41,24 | 39,48 | 41,13 |
| 6 | Anti Terra 204 | 2,90 | 3,20 | 3,21 | 2,99 | 3,23 | 3,10 | 3,23 |
| 7 | Aerosil R 972 | 2,32 | 2,56 | 2,57 | 2,39 | 2,59 | 2,48 | 2,58 |
| 8 | Finntalc M 15 | 73,09 | 80,62 | 80,87 | 75,42 | 81,49 | 78,02 | 81,29 |
| 9 | EWO | 76,58 | 84,46 | 84,72 | 79,01 | 85,37 | 81,73 | 85,16 |
| 10 | Finntitan 3-RD 2-3036 | 15,66 | 17,28 | 17,33 | 16,16 | 17,46 | 16,72 | 17,42 |
| 10 | Zinkphosphat ZP 10 | 69,61 | | | | | | |
| 10 | Wa 2901 | | 25,28 | | | | | |
| 10 | Wa 2890 | | | 23,81 | | | | |
| 10 | Wa 2825 | | | | 55,91 | | | |
| 10 | Wa 2886 | | | | | 20,17 | | |
| 10 | Wa 2894 | | | | | | 40,62 | |
| 10 | Wa 2880C | | | | | | | 21,37 |
| 11 | Flammruß 101 | 0,05 | 0,05 | 0,05 | 0,05 | 0,05 | 0,05 | 0,05 |
| | Ausbeute | 500 | 500 | 500 | 500 | 500 | 500 | 500 |

**Tab. 2: Rezepturen des Stammlackes (Ansatz ca. 500g, Pigmente nach Masse ausgetauscht)**

| | **Rohstoff** | **1/1 (g)** | **2/2 (g)** | **2/3 (g)** | **2/4 (g)** | **2/5 (g)** | **2/6 (g)** | **2/7 (g)** |
|---|---|---|---|---|---|---|---|---|
| 1 | Beckopox EP 301, 75%ig in Xylol | 137,49 | 137,4 9 | 137,4 9 | 137,4 9 | 137,4 9 | 137,4 9 | 137,4 9 |
| 2 | Xylol | 41,27 | 41,27 | 41,27 | 41,27 | 41,27 | 41,27 | 41,27 |
| 3 | Dowanol PM | 35,39 | 35,39 | 35,39 | 35,39 | 35,39 | 35,39 | 35,39 |
| 4 | Methylisoamyl-keton | 8,70 | 8,70 | 8,70 | 8,70 | 8,70 | 8,70 | 8,70 |
| 5 | Bentone 38, 8%ig in Xylol | 36,99 | 36,99 | 36,99 | 36,99 | 36,99 | 36,99 | 36,99 |
| 6 | Anti Terra 204 | 2,90 | 2,90 | 2,90 | 2,90 | 2,90 | 2,90 | 2,90 |
| 7 | Aerosil R 972 | 2,32 | 2,32 | 2,32 | 2,32 | 2,32 | 2,32 | 2,32 |
| 8 | Finntalc M 15 | 73,09 | 73,09 | 73,09 | 73,09 | 73,09 | 73,09 | 73,09 |
| 9 | EWO | 76,58 | 76,58 | 76,58 | 76,58 | 76,58 | 76,58 | 76,58 |
| 10 | Finntitan 3-RD 2-3036 | 15,66 | 15,66 | 15,66 | 15,66 | 15,66 | 15,66 | 15,66 |
| 10 | Zinkphosphat ZP 10 | 69,61 | | | | | | |
| 10 | Wa 2901 | | 69,61 | | | | | |
| 10 | Wa 2890 | | | 69,61 | | | | |
| 10 | Wa 2825 | | | | 69,61 | | | |
| 10 | Wa 2886 | | | | | 69,61 | | |
| 10 | Wa 2894 | | | | | | 69,61 | |
| 10 | Wa 2880C | | | | | | | 69,61 |
| 11 | Flammruß 101 | 0,05 | 0,05 | 0,05 | 0,05 | 0,05 | 0,05 | 0,05 |
| | Ausbeute | 500 | 500 | 500 | 500 | 500 | 500 | 500 |

Die Herstellung erfolgte folgendermaßen: Pos. 1 vorlegen; Pos. 5 zugeben und unter Rühren einarbeiten; Pos 6 unter Rühren zugeben; Pos. 7-11 portionsweise zugeben und mit dem Spatel einrühren; Pos. 2-4 vormischen und unter Rühren zugeben (zunächst nur soviel Lösemittel zugeben, dass eine für die Dispergierung geeignete Viskosität vorliegt, den Rest nach dem Dispergieren zugeben). Es wurde 60 Min. mit einer Drehzahl von 3300 U/min mit 250 g Glasperlen unter Kühlung dispergiert.

Zur Applikation wurden 500 g Stammlack mit 64 g Härter aus 41,5 g Versamid und 22,5 g Xylol gut gemischt und der fertige Lack mit einem Xylol-Dowanol PM-Gemisch (4:1) auf Spritzviskosität (DIN Becher 4: 16 - 17 sec.) verdünnt.

Die Applikation auf Stahlbleche erfolgte durch Hochdruckspritzen mit einer 1,3 mm Spritzdüse, Druck 4 bar, Schichtdicke 50 ± 5 µm. Bei den Rezepturen mit gleicher Masse Pigment ergab sich eine deutliche Änderung des Fließverhaltens beim Stammlack, es konnte daher in dieser Serie nicht mit der Sollschichtdicke beschichtet werden. Pro Versuchsansatz wurden je 3 Bleche für die Tests Nasslagerung, Salzsprühtest und Kondenswassertest, zuzüglich eines Rückmusterblechs, beschichtet. Nach einer Konditionierung von 10 Tagen in der Klimakammer wurden folgende Untersuchungen durchgeführt:
a) Salzsprühtest (nach DIN 50021)
b) Kondenswassertest (ähnlich DIN 50017)
c) Nasslagerung (DIN 6270/1)
d) Haftfestigkeitsprüfung nach 4 Wochen (DIN 53151)
e) Bestimmung des Blasengrades, wöchentlich (DIN 53209)
f) Bestimmung der Unterrostung nach 28 Tagen (DIN 53167)

Die Ergebnisse der Haftfestigkeitsprüfung sind in den Tabellen 3 und 4 zusammengestellt.

**Tab. 3: Ergebnisse der Haftfestigkeitsprüfungen (DIN 53151) (Serie 1)**

| Blech Nr. | 1/1/1 | 1/1/2 | 1/2 | 1/3 | 1/4 | 1/5 | 1/6 | 1/7 |
|---|---|---|---|---|---|---|---|---|
| Pigmenttyp | ZP 10 | ZP 10 | Wa 2901 | Wa 2890 | Wa 2825 | Wa 2886 | Wa 2894 | Wa 2880C |
| Haftfestigkeit | | | | | | | | |
| nach Salzsprühtest | | | | | | | | |
| 1 | 0 | 1 | 4 | 0 | 5 | 2 | 0 | 5 |
| 2 | 1 | 4 | 5^{*} | 5^{*} | 5 | 0 | 1 | 0 |
| 3 | 0 | 5^{*} | 5 | 1 | 5 | 1 | 5* | 0 |
| nach Kondens-wassertest | | | | | | | | |
| 1 | 1 | 1 | 5* | 0 | 4 | 0 | 1 | 2 |
| 2 | 1 | 0 | 5* | 0 | 1 | 4 | 0 | 2 |
| 3 | 1 | 1 | 5** | 0 | 1 | 3 | 0 | 2 |
| nach Nasslagerung | | | | | | | | |
| 1 | 2 | 2 | 5* | 5* | 5* | 1 | 0 | 5 |
| 2 | 2 | 5 | 5* | 2 | 3 | 1 | 1 | 2 |
| 3 | 5* | 5** | 5** | 5* | 4 | 5** | 1 | 5 |

| | | | | | | | | |
|---|---|---|---|---|---|---|---|---|
| ^{*} vollständige Enthaftung im Schnittfeld ^{**} vollständige Enthaftung über das Schnittfeld hinaus | | | | | | | | |

**Tab. 4: Ergebnisse der Haftfestigkeitsprüfungen (DIN 53151) (Serie 2, Sollschichtdicke nicht eingehalten)**

| Blech Nr. | 1/1/1 | 1/1/2 | 2/2 | 2/3 | 2/4 | 2/5 | 2/6 | 2/7 |
|---|---|---|---|---|---|---|---|---|
| Pigmenttyp | ZP 10 | ZP 10 | Wa 2901 | Wa 2890 | Wa 2825 | Wa 2886 | Wa 2894 | Wa 2880C |
| Haftfestigkeit | | | | | | | | |
| nach Salzsprühtest | | | | | | | | |
| 1 | 0 | 1 | 5* | 5* | 5 | 4 | 1 | 1 |
| 2 | 1 | 4 | 5 | 5** | 5* | 1 | 3 | 0 |
| 3 | 0 | 5* | 5* | 5 | 1 | 2 | 0 | 0 |
| nach Kondenswassertest | | | | | | | | |
| 1 | 1 | 1 | 5* | 5 | 5* | 0 | 1 | 3 |
| 2 | 1 | 0 | 3 | 5** | 2 | 0 | 2 | 1 |
| 3 | 1 | 1 | 4 | 5 | 5** | 1 | 1 | 5* |
| nach Nasslagerung | | | | | | | | |
| 1 | 2 | 2 | 5** | 5 | 5 | 3 | 5 | 3 |
| 2 | 2 | 5 | 5** | 5** | 5* | 5* | 5 | 5** |
| 3 | 5* | 5** | 5** | 5** | 5* | 5 | 2 | 2 |

| | | | | | | | | |
|---|---|---|---|---|---|---|---|---|
| * vollständige Enthaftung im Schnittfeld ** vollständige Enthaftung über das Schnittfeld hinaus | | | | | | | | |

Es lässt sich erkennen, dass die erfindungsgemäßen Aluminiumpigmente teilweise eine bessere Haftung, zumindest aber eine vergleichbare Haftung wie das Vergleichspigment Zinkphosphat (ZP10) ergeben. Das zum Vergleich herangezogene zinkfreie Pigment schneidet dagegen viel schlechter ab.

Die Ergebnisse der Blasengradbestimmung sind in den Tabellen 5 und 6 zusammengestellt.

**Tab. 5: Blasengrad (DIN 53209) (Serie 1)**

| | **Blech Nr.** | **1/1/1** | | **1/1/2** | | **1/2** | | **1/3** | | **1/4** | | **1/5** | | **1/6** | | **1/7** | |
|---|---|---|---|---|---|---|---|---|---|---|---|---|---|---|---|---|---|
| Pigmenttyp | | ZP 10 | | ZP 10 | | Wa 2901 | | Wa 2890 | | Wa 2825 | | Wa 2886 | | Wa 2894 | | Wa 2880C | |
| Blasengrad | | m | g | m | g | m | g | m | g | m | g | m | g | m | g | m | g |
| nach Salzsprühtest | | | | | | | | | | | | | | | | | |
| 7 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 0 | 0 | 0 | 0 | 0 | 0 | 0 | 0 | 0 | 0 |
| 14 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 0 | 0 | 0 | 0 | 0 | 0 | 0 | 0 | 0 | 0 |
| 21 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 0 | 0 | 0 | 0 | 0 | 0 | 0 | 0 | 0 | 0 |
| 28 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 0 | 0 | 0 | 0 | 0 | 0 | 0 | 0 | 0 | 0 |
| nach Kondenswassertest | | | | | | | | | | | | | | | | | |
| 7 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 0 | 0 | 0 | 0 | 0 | 0 | 0 | 0 | 0 | 0 |
| 14 Tage | 1 | 0 | 0 | 0 | 0 | 0 | 0 | 0 | 0 | 1 | 1 | 0 | 0 | 0 | 0 | 1 | 1 |
| | 2 | 0 | 0 | 0 | 0 | 3 | 3 | 0 | 0 | 1 | 1 | 0 | 0 | 0 | 0 | 1 | 1 |
| | 3 | 0 | 0 | 0 | 0 | 1 | 1 | 0 | 0 | 0 | 0 | 0 | 0 | 0 | 0 | 1 | 1 |
| 21 Tage | 1 | 0 | 0 | 0 | 0 | 4 | 1 | 0 | 0 | 1 | 1 | 0 | 0 | 0 | 0 | 1 | 1 |
| | 2 | 0 | 0 | 0 | 0 | 3 | 4 | 0 | 0 | 1 | 2 | 0 | 0 | 0 | 0 | 1 | 1 |
| | 3 | 0 | 0 | 0 | 0 | 1 | 1 | 0 | 0 | 0 | 0 | 0 | 0 | 0 | 0 | 1 | 1 |
| 28 Tage | 1 | 0 | 0 | 0 | 0 | 5 | 2 | 0 | 0 | 1 | 1 | 0 | 0 | 0 | 0 | 1 | 1 |
| | 2 | 0 | 0 | 0 | 0 | 3 | 4 | 0 | 0 | 2 | 2 | 0 | 0 | 0 | 0 | 1 | 1 |
| | 3 | 0 | 0 | 0 | 0 | 1 | 1 | 0 | 0 | 0 | 0 | 0 | 0 | 0 | 0 | 1 | 1 |
| nach Nasslagerung | | | | | | | | | | | | | | | | | |
| 7 Tage | 1 | 0 | 0 | 0 | 0 | 2 | 2 | 0 | 0 | 0 | 0 | 0 | 0 | 0 | 0 | 0 | 0 |
| | 2 | 0 | 0 | 0 | 0 | 3 | 2 | 0 | 0 | 0 | 0 | 0 | 0 | 0 | 0 | 0 | 0 |
| | 3 | 0 | 0 | 0 | 0 | 3 | 2 | 0 | 0 | 0 | 0 | 0 | 0 | 0 | 0 | 0 | 0 |
| 14 Tage | 1 | 0 | 0 | 0 | 0 | 3 | 4 | 0 | 0 | 0 | 0 | 0 | 0 | 0 | 0 | 0 | 0 |
| | 2 | 0 | 0 | 1 | 1 | 3 | 2 | 0 | 0 | 0 | 0 | 0 | 0 | 0 | 0 | 0 | 0 |
| | 3 | 0 | 0 | 1 | 1 | 3 | 4 | 0 | 0 | 0 | 0 | 0 | 0 | 0 | 0 | 0 | 0 |
| 21 Tage | 1 | 0 | 0 | 0 | 0 | 3 | 4 | 0 | 0 | 0 | 0 | 0 | 0 | 0 | 0 | 0 | 0 |
| | 2 | 0 | 0 | 2 | 1 | 3 | 2 | 0 | 0 | 0 | 0 | 0 | 0 | 0 | 0 | 0 | 0 |
| | 3 | 0 | 0 | 1 | 1 | 3 | 4 | 0 | 0 | 0 | 0 | 0 | 0 | 0 | 0 | 0 | 0 |
| 28 Tage | 1 | 0 | 0 | 0 | 0 | 3 | 4 | 1 | 1 | 1 | 1 | 0 | 0 | 0 | 0 | 1 | 1 |
| | 2 | 0 | 0 | 2 | 2 | 3 | 2 | 0 | 0 | 0 | 0 | 0 | 0 | 0 | 0 | 1 | 1 |
| | 3 | 1 | 1 | 1 | 1 | 3 | 4 | 0 | 0 | 1 | 1 | 0 | 0 | 1 | 1 | 1 | 1 |

Im Salzsprühtest wurde nach 4 Wochen noch keinerlei Differenzierung bezüglich des Blasengrades erhalten. Beim Kondenswassertest zeigten die Bleche mit den erfindungsgemäßen Grundierungen 1/3, 1/5 und 1/6 sowie mit Zinkphosphat auch nach 4 Wochen noch keine Blasen. Im Mittelfeld liegen die erfindungsgemäßen Grundierungen 1/4 und 1/7, während die alternative zinkfreie Grundierung 1/2 schlecht abschneidet. Bei der Nasslagerung zeigten nur die Bleche mit der erfindungsgemäßen Grundierung 1/5 nach 4 Wochen noch keine Blasen. Gut schnitten auch die Bleche mit Zinkphosphat sowie mit den erfindungsgemäßen Grundierungen 1/3, 1/6 und 1/7 ab, die erst nach der 4 Woche wenige kleine Blasen aufwiesen. Innerhalb der Fehlergrenzen sind aber hier alle Bleche außer die mit der alternativen zinkfreien Grundierung 1/2 gleich gut.

**Tab. 6: Blasengrad (DIN 53209) (Serie 2, Sollschichtdicke nicht eingehalten)**

| Blech Nr. | | **1/1/1** | | **1/1/2** | | **2/2** | | **2/3** | | **2/4** | | **2/5** | | **2/6** | | **2/7** | |
|---|---|---|---|---|---|---|---|---|---|---|---|---|---|---|---|---|---|
| Pigmenttyp | | ZP 10 | | ZP 10 | | Wa 2901 | | Wa 2890 | | Wa 2825 | | Wa 2886 | | Wa 2894 | | Wa 2880C | |
| Blasengrad | | m | g | m | g | m | g | m | g | m | g | m | g | m | g | m | g |
| nach Salzsprühtest | | | | | | | | | | | | | | | | | |
| 7 Tage | 1 | 0 | 0 | 0 | 0 | 4 | 3 | 0 | 0 | 0 | 0 | 0 | 0 | 0 | 0 | 0 | 0 |
| | 2 | 0 | 0 | 0 | 0 | 4 | 3 | 0 | 0 | 0 | 0 | 0 | 0 | 0 | 0 | 0 | 0 |
| | 3 | 0 | 0 | 0 | 0 | 4 | 3 | 0 | 0 | 0 | 0 | 0 | 0 | 0 | 0 | 0 | 0 |
| 14 Tage | 1 | 0 | 0 | 0 | 0 | 4 | 3 | 0 | 0 | 0 | 0 | 0 | 0 | 0 | 0 | 0 | 0 |
| | 2 | 0 | 0 | 0 | 0 | 4 | 3 | 0 | 0 | 0 | 0 | 0 | 0 | 0 | 0 | 0 | 0 |
| | 3 | 0 | 0 | 0 | 0 | 4 | 3 | 0 | 0 | 0 | 0 | 0 | 0 | 0 | 0 | 0 | 0 |
| 21 Tage | 1 | 0 | 0 | 0 | 0 | 5 | 4 | 0 | 0 | 0 | 0 | 0 | 0 | 0 | 0 | 0 | 0 |
| | 2 | 0 | 0 | 0 | 0 | 5 | 4 | 0 | 0 | 0 | 0 | 0 | 0 | 0 | 0 | 0 | 0 |
| | 3 | 0 | 0 | 0 | 0 | 5 | 5 | 0 | 0 | 0 | 0 | 0 | 0 | 0 | 0 | 0 | 0 |
| 28 Tage | 1 | 0 | 0 | 0 | 0 | 5 | 4 | 0 | 0 | 0 | 0 | 0 | 0 | 0 | 0 | 0 | 0 |
| | 2 | 0 | 0 | 0 | 0 | 5 | 4 | 0 | 0 | 0 | 0 | 0 | 0 | 0 | 0 | 0 | 0 |
| | 3 | 0 | 0 | 0 | 0 | 5 | 5 | 0 | 0 | 0 | 0 | 0 | 0 | 0 | 0 | 0 | 0 |

| nach Kondenswassertest | | | | | | | | | | | | | | | | | |
|---|---|---|---|---|---|---|---|---|---|---|---|---|---|---|---|---|---|
| 7 Tage | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 2 | 2 | 0 | 0 | 1 | 1 | 0 | 0 | 0 | 0 | 0 | 0 |
| | 3 | 0 | 0 | 0 | 0 | 3 | 3 | 0 | 0 | 1 | 1 | 0 | 0 | 0 | 0 | 0 | 0 |
| 14 Tage | 1 | 0 | 0 | 0 | 0 | 3 | 3 | 0 | 0 | 2 | 1 | 0 | 0 | 0 | 0 | 0 | 0 |
| | 2 | 0 | 0 | 0 | 0 | 2 | 2 | 0 | 0 | 2 | 1 | 0 | 0 | 0 | 0 | 0 | 0 |
| | 3 | 0 | 0 | 0 | 0 | 3 | 3 | 0 | 0 | 3 | 2 | 0 | 0 | 0 | 0 | 0 | 0 |
| 21 Tage | 1 | 0 | 0 | 0 | 0 | 3 | 3 | 1 | 1 | 3 | 3 | 0 | 0 | 0 | 0 | 0 | 0 |
| | 2 | 0 | 0 | 0 | 0 | 2 | 2 | 2 | 2 | 4 | 3 | 0 | 0 | 0 | 0 | 0 | 0 |
| | 3 | 0 | 0 | 0 | 0 | 3 | 3 | 1 | 1 | 3 | 4 | 0 | 0 | 0 | 0 | 0 | 0 |
| 28 Tage | 1 | 0 | 0 | 0 | 0 | 3 | 3 | 1 | 1 | 3 | 3 | 0 | 0 | 0 | 0 | 0 | 0 |
| | 2 | 0 | 0 | 0 | 0 | 2 | 2 | 2 | 2 | 4 | 3 | 0 | 0 | 0 | 0 | 0 | 0 |
| | 3 | 0 | 0 | 0 | 0 | 3 | 3 | 1 | 1 | 3 | 4 | 0 | 0 | 0 | 0 | 0 | 0 |

| nach Nasslagerung | | | | | | | | | | | | | | | | | |
|---|---|---|---|---|---|---|---|---|---|---|---|---|---|---|---|---|---|
| 7 Tage | 1 | 0 | 0 | 0 | 0 | 4 | 4 | 0 | 0 | 0 | 0 | 0 | 0 | 0 | 0 | 0 | 0 |
| | 2 | 0 | 0 | 0 | 0 | 4 | 4 | 0 | 0 | 0 | 0 | 0 | 0 | 0 | 0 | 0 | 0 |
| | 3 | 0 | 0 | 0 | 0 | 4 | 4 | 0 | 0 | 0 | 0 | 0 | 0 | 0 | 0 | 0 | 0 |
| 14 Tage | 1 | 0 | 0 | 0 | 0 | 5 | 4 | 0 | 0 | 0 | 0 | 0 | 0 | 0 | 0 | 0 | 0 |
| | 2 | 0 | 0 | 0 | 0 | 4 | 4 | 0 | 0 | 0 | 0 | 0 | 0 | 0 | 0 | 0 | 0 |
| | 3 | 0 | 0 | 0 | 0 | 4 | 4 | 0 | 0 | 0 | 0 | 0 | 0 | 0 | 0 | 0 | 0 |
| 21 Tage | 1 | 0 | 0 | 0 | 0 | 5 | 4 | 0 | 0 | 0 | 0 | 0 | 0 | 0 | 0 | 0 | 0 |
| | 2 | 0 | 0 | 2 | 1 | 4 | 4 | 0 | 0 | 0 | 0 | 0 | 0 | 0 | 0 | 0 | 0 |
| | 3 | 0 | 0 | 1 | 1 | 4 | 4 | 0 | 0 | 0 | 0 | 0 | 0 | 0 | 0 | 0 | 0 |
| 28 Tage | 1 | 0 | 0 | 0 | 0 | 5 | 4 | 3 | 2 | 1 | 1 | 1 | 1 | 1 | 1 | 0 | 0 |
| | 2 | 0 | 0 | 2 | 2 | 5 | 4 | 1 | 1 | 0 | 0 | 1 | 1 | 0 | 0 | 1 | 1 |
| | 3 | 1 | 1 | 1 | 1 | 4 | 4 | 0 | 0 | 1 | 1 | 1 | 1 | 0 | 0 | 0 | 0 |

Die Bleche mit den Grundierungen der Serie 2 bestätigen die Ergebnisse von Serie 1 tendenziell. Trotz der geringeren Schichtdicke schneiden auch hier alle erfindungsgemäßen Grundierungen außer 1/3 innerhalb der Fehlergrenzen gleich gut ab wie Zinkphosphat. Die alternative zinkfreie Grundierung schneidet ebenfalls schlecht ab.

Die Ergebnisse bezüglich der Unterwanderung sind in den Tabellen 7 und 8 zusammengefasst.

**Tab. 7: Unterwanderung nach DIN 53167 (Serie 1)**

| Grundierung Nr. | **1/1/1** | **1/1/2** | **1/2** | **1/3** | **1/4** | **1/5** | **1/6** | **1/7** |
|---|---|---|---|---|---|---|---|---|
| Pigmenttyp | ZP 10 | ZP 10 | Wa 2901 | Wa 2890 | Wa 2825 | Wa 2886 | Wa 2894 | Wa 2880C |
| nach Salzsprühtest 28 Tage | 5,6 | 16,6 | 6,4 | 5,1 | 5,1 | 2,9 | 5,4 | 4,8 |

Die geringste Unterwanderung wurde an dem Blech mit der erfindungsgemäßen Grundierung 1/5 gefunden. Die Unterwanderung bei den anderen Blechen außer dem mit der 2. Referenzgrundierung 1/1/2 lagen alle sehr nahe beieinander zwischen 4,8 und 6,4 mit der Reihenfolge Grundierung 1/7, 1/3 und 1/4, 1/6 und Referenz 1/1/1.

**Tab. 8: Unterwanderung nach DIN 53167 (Serie 2, Sollschichtdicke nicht eingehalten)**

| Grundierung Nr. | **1/1/1** | **1/1/2** | **2/2** | **2/3** | **2/4** | **2/5** | **2/6** | **2/7** |
|---|---|---|---|---|---|---|---|---|
| Pigmenttyp | ZP 10 | ZP 10 | Wa 2901 | Wa 2890 | Wa 2825 | Wa 2886 | Wa 2894 | Wa 2880C |
| nach Salzsprühtest 28 Tage | 5,6 | 16,6 | 1 | 1,3 | 3 | 1 | 4,9 | 0,8 |

Bei den Blechen mit den Grundierungen der Serie 2 mit der geringeren Schichtdicke zeigten die Bleche mit den Grundierungen 2/2, 2/3, 2/5 und 2/7 eine sehr geringe Unterwanderung. Die Unterwanderung bei dem Blech mit den Grundierungen 2/4 und 2/6 lag etwas besser als bei dem mit der Zinkphosphat-Grundierung.

Insgesamt zeigen die Versuche, dass Aluminiumorthophosphat als Korrosionsschutzpigment in der Wirksamkeit mit dem derzeit verwendeten Zinkphosphat vergleichbar ist. Ein bisher verfügbares alternatives zinkfreies Pigment, Pigmentan E, erreicht dagegen eine deutlich schlechtere Wirksamkeit.

## Patentansprüche

1. Korrosionsschutzpigment für Anstrichmittel bestehend aus Aluminiumorthophosphat.

2. Korrosionsschutzpigment gemäß Anspruch 1, **dadurch gekennzeichnet, dass** das Aluminiumorthophosphat auf eine Korngröße D₅₀ von 1 - 15 µm und D₉₀ von 1 - 30 µm aufweist.

3. Korrosionsschutzpigment gemäß Anspruch 1, **dadurch gekennzeichnet, dass** das Aluminiumorthophosphat ein Schüttgewicht von 90 bis 250 g/l aufweist.

4. Korrosionsschutzpigment gemäß Anspruch 1, **dadurch gekennzeichnet, dass** das Aluminiumorthophosphat ausgewählt ist unter amorphem Aluminiumorthophosphat, orthorhombischem Aluminiumorthophosphat, Mischungen aus orthorhombischem und amorphem Aluminiumorthophosphat und Mischungen aus orthorhombischem, trigonalem und amorphem Aluminiumorthophosphat.

5. Korrosionsschutzpigment gemäß Anspruch 4, **dadurch gekennzeichnet, dass** das Aluminiumorthophosphat ausgewählt ist 100 Gew.-% amorphem Aluminiumorthophosphat, Mischungen aus 20 bis 80 Gew.-% amorphem und 80 bis 20 Gew.-% orthorhombischem Aluminiumorthophosphat und Mischungen aus 20 bis 50 Gew.-% orthorhombischem, 20 bis 70 Gew.-% trigonalem und 10 bis 20 Gew.-% amorphem Aluminiumorthophosphat.

6. Verwendung von Aluminiumorthophosphat als Korrosionsschutzpigment.

7. Herstellung von Korrosionsschutzpigmenten gemäße einem der Ansprüche 1 bis 5 umfassend die Schritte:
a) Umsetzung eines Aluminiumsalzes mit Phosphorsäure oder einem Phosphat in wässriger Phase
b) Fällung des Aluminiumorthophosphats
c) Abfiltrieren des Aluminiumorthophosphats und
d) Trocknen des Aluminiumorthophosphats.

8. Verfahren gemäß Anspruch 7, **dadurch gekennzeichnet, dass** das Aluminiumorthophosphat in einem Schritt e) bei Temperaturen von 500 bis 800 °C getempert wird.

9. Verfahren gemäß Anspruch 7 oder 8, **dadurch gekennzeichnet, dass** das Aluminiumorthophosphat in einem Schritt f) auf eine Korngröße D₅₀ ≤ 15 µm und D₉₀ ≤ 30 µm gemahlen wird.

10. Verfahren gemäß einem der Ansprüche 7 bis 9, **dadurch gekennzeichnet, dass** das Aluminiumsalz ein Aluminiumhydroxid ist und mit Phosphorsäure umgesetzt wird.

11. Verfahren gemäß einem der Ansprüche 7 bis 9, **dadurch gekennzeichnet, dass** das Aluminiumsalz ein Aluminiumsulfat ist und mit Natriumphosphat umgesetzt wird.

12. Verfahren gemäß einem der Ansprüche 7 bis 11, **dadurch gekennzeichnet, dass** die Trocknung eine Sprühtrocknung ist.
